(19) Europäisches Patentamt
European Patent Office
Office européen des brevets

(11) EP 2 832 766 A1

(12) EUROPEAN PATENT APPLICATION
published in accordance with Art. 153(4) EPC

(43) Date of publication:
**04.02.2015 Bulletin 2015/06**

(21) Application number: **13769114.3**

(22) Date of filing: **01.04.2013**

(51) Int Cl.:
***C08G 65/333*** *(2006.01)* ***C08B 37/16*** *(2006.01)*

(86) International application number:
**PCT/JP2013/059910**

(87) International publication number:
**WO 2013/147301 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.03.2012 JP 2012082227**

(71) Applicants:
- **Ube Industries, Ltd.**
  **Ube-shi, Yamaguchi 780-8633 (JP)**
- **Advanced Softmaterials Inc.**
  **Kashiwa-shi**
  **Chiba 277-0882 (JP)**

(72) Inventors:
- **YOKOTA, Naoyuki**
  **Ube-shi**
  **Yamaguchi 755-8633 (JP)**
- **ARIMITSU, Kenji**
  **Ube-shi**
  **Yamaguchi 755-8633 (JP)**
- **MATSUSHITA, Akio**
  **Ube-shi**
  **Yamaguchi 755-8633 (JP)**
- **OOUE, Yoshitaka**
  **Ube-shi**
  **Yamaguchi 755-8633 (JP)**
- **FUJIMOTO, Mikio**
  **Ube-shi**
  **Yamaguchi 755-8633 (JP)**
- **FUKUDA, Yasunori**
  **Ube-shi**
  **Yamaguchi 755-8633 (JP)**
- **IWATA, Minoru**
  **Kashiwa-shi**
  **Chiba 277-0882 (JP)**
- **HAYASHI, Yuki**
  **Kashiwa-shi**
  **Chiba 277-0882 (JP)**

(74) Representative: **Hoffmann Eitle**
**Patent- und Rechtsanwälte PartmbB**
**Arabellastraße 30**
**81925 München (DE)**

# (54) PROCESS FOR PREPARING POLYROTAXANE HAVING BLOCKING GROUPS

(57) The invention provides a method of producing a polyrotaxane having cyclic molecules, a linear molecule threaded through the cyclic molecules to form a clathrate, and blocking groups at both ends of the linear molecule to prevent the separation of the cyclic molecules from the linear molecule, the method including forming the blocking groups by reacting the linear molecule piercing the cyclic molecules, the linear molecule having carboxyl groups at both ends thereof, with a blocking agent having an amino group in the absence of a solvent or in at least one organic solvent selected from the group consisting of aprotic amide solvents and aromatic hydrocarbons, and further in the presence of 2.0 mol to 100 mol of a triazine-based amidating agent per 1 mol of the carboxyl groups in the linear molecule.

EP 2 832 766 A1

## Description

### TECHNICAL FIELD

The present invention relates to a method of producing a polyrotaxane having cyclic molecules, a linear molecule threaded through the cyclic molecules to form a clathrate, and blocking groups at both ends of the linear molecule to prevent the separation of the cyclic molecules from the linear molecule.

### BACKGROUND ART

In recent years, topological gels characterized by the free movement of crosslinking points attract attention as a new type of polymer gels. Such topological gels are composed of a polyrotaxane that is a clathrate compound including cyclic molecules (rotators), a linear molecule (an axis) threaded through the cyclic molecules, and blocking groups at both ends of the linear molecule to prevent the separation of the cyclic molecules from the linear molecule. In particular, polyrotaxanes having α-cyclodextrin (hereinafter, also written as "α-CD") as the cyclic molecules and polyethylene glycol (hereinafter, also written as "PEG") as the linear molecule possess various properties and are actively studied in recent years (see, for example, Patent Literature 1).

For example, Patent Literature 1 reports a method for efficient production of polyrotaxanes. Specifically, first, both ends of the molecule of, for example, PEG are converted into carboxyl groups and thereafter the PEG is mixed together with α-CD to form a clathrate with the α-CD, namely, to give a PEG/α-CD clathrate compound (a pseudo polyrotaxane). Next, the pseudo polyrotaxane is reacted with, for example, a blocking agent having an amino group or an OH group in the presence of a BOP reagent and/or a HOBt reagent to introduce blocking groups to both ends of the PEG moiety of the pseudo polyrotaxane.

Patent Literature 1: International Publication WO 2005/095493

### SUMMARY OF INVENTION

#### Technical Problem

The method of Patent Literature 1, however, has been shown to have a problem in that the linear molecule and the cyclic molecules are prone to be separated (dissociated) from each other in a solvent and this dissociation also occurs in the reaction for the introduction of the blocking groups.

An object of the present invention is to provide methods capable of producing a polyrotaxane having the desired inclusion rate in high yield and with high purity. Solution to Problem

The inventors of the present invention carried out extensive studies in order to achieve the above object. As a result, the present inventors have found that blocking groups may be introduced to both ends of a linear molecule while maintaining the desired inclusion rate and such a blocked polyrotaxane may be obtained in good yield and with high purity, by reacting a pseudo polyrotaxane including cyclic molecules and a linear molecule, for example, a linear PEG molecule terminated with carboxyl groups at both ends, with a blocking agent having an amino group in the absence of a solvent or in the presence of a solvent that is inert in the reaction, and also in the presence of a specific amount of a triazine-based amidating agent. Based on the finding of this method, the present invention has been completed.

The present invention may be summarized as follows.

Invention 1 resides in a method of producing a polyrotaxane having cyclic molecules, a linear molecule threaded through the cyclic molecules to form a clathrate, and blocking groups at both ends of the linear molecule to prevent the separation of the cyclic molecules from the linear molecule, the method including:

> forming the blocking groups by reacting the linear molecule piercing the cyclic molecules, the linear molecule having carboxyl groups at both ends thereof, with a blocking agent having an amino group in the absence of a solvent or in at least one organic solvent selected from the group consisting of aprotic amide solvents and aromatic hydrocarbons, and further in the presence of 2.0 mol to 100 mol of a triazine-based amidating agent per 1 mol of the carboxyl groups in the linear molecule.

Invention 2 resides in the method according to Invention 1, wherein the triazine-based amidating agent is a compound represented by Formula (1):

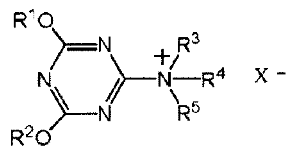

(1)

in the formula,

$R^1$ and $R^2$ are each independently an alkyl group having 1 to 4 carbon atoms or an aryl group having 6 to 8 carbon atoms,
any one of $R^3$, $R^4$ and $R^5$ is an alkyl group having 1 to 4 carbon atoms and the other two form a 5- or 6-membered ring together with the nitrogen atom bonded therewith, and
X is a halogen atom.

Invention 3 resides in the method according to Invention 2, wherein the triazine-based amidating agent is 4-(4,6-dimethoxy-1,3,5-triazin-2-yl)-4-methyl morpholinium chloride (DMT-MM).

Invention 4 resides in the method according to any of Inventions 1 to 3, wherein the linear molecule having carboxyl groups at both ends thereof is a polyalkylene glycol having carboxyl groups at both ends of the molecule.

Invention 5 resides in the method according to any of Inventions 1 to 4, wherein the cyclic molecules are a cyclodextrin.

Invention 6 resides in the method according to any of Inventions 1 to 5, wherein the blocking agent having an amino group is adamantylamine or a hydrochloride salt thereof.

Invention 7 resides in the method according to any of Inventions 1 to 6, wherein the reaction involves 3.8 mol to 80 mol of the triazine-based amidating agent per 1 mol of the carboxyl groups in the linear molecule having carboxyl groups at both ends thereof.

Invention 8 resides in the method according to any of Inventions 1 to 7, wherein the reaction involves 1.4 mol to 40 mol of the blocking agent having an amino group per 1 mol of the carboxyl groups in the linear molecule having carboxyl groups at both ends thereof.

Invention 9 resides in the method according to any of Inventions 1 to 8, wherein the reaction is performed in at least one solvent selected from the group consisting of dimethylformamide, dimethylacetamide, N-methylpyrrolidone and toluene.

Invention 10 resides in the method according to any of Inventions 1 to 9, wherein the reaction is performed in the presence of an organic base.

Invention 11 resides in the method according to any of Inventions 1 to 10, wherein the reaction is performed at a reaction temperature of 5 to 60°C.

Invention 12 resides in the method according to any of Inventions 1 to 11, wherein the reaction is performed under conditions in which the water content in a reaction mixture at the start of the reaction is not more than 5 mass%.

Advantageous Effects of Invention

According to the methods of the invention, polyrotaxanes having the desired inclusion rate may be produced in high yield and with good purity.

In the reaction for introducing blocking groups into a pseudo polyrotaxane with use of a blocking agent having an amino group, two reactions take place concurrently. Specifically, the blocking agent having an amino group undergoes the amidation reaction with the carboxyl groups at the ends of the linear molecule in the pseudo polyrotaxane; at the same time, the esterification reaction takes place between the hydroxyl groups of cyclodextrin, which is possibly present as cyclic molecules in the pseudo polyrotaxane, and the carboxyl groups at the ends of the linear molecule. However, the inventive method involving a triazine-based amidating agent allows the blocking groups to be introduced by the amidation of the carboxyl groups with a very high rate (hereinafter, also written as amidation selectivity). That is, the inventive method can produce the target blocked polyrotaxane in high yield and with high purity by achieving very high reaction selectivity.

The triazine-based amidating agents used in the invention, typically 4-(4,6-dimethoxy-1,3,5-triazin-2-yl)-4-methyl morpholinium chloride (DMT-MM), are known as dehydration condensing agents that are usually suited for use in the presence of water. In contrast, pseudo polyrotaxanes generally have low solubility in water and are hardly blocked in the presence of water. It is therefore appropriate to consider that the use of the above triazine-based amidating agents is not suited in this case. In spite of this technical knowledge, the present inventors adopted the use of a triazine-based amidating agent in the reaction for the introduction of blocking groups. As a result, the present inventors have not only found that the amidation reaction proceeds with a good reaction yield even in the absence of water and further in an

inhomogeneous system such as a solid-liquid suspension system, but also found that the reaction can afford a polyrotaxane maintaining the desired inclusion rate after the completion of the reaction while realizing high yield and high purity. The present inventors have thus completed the inventive production methods.

MODE FOR CARRYING OUT INVENTION

The present invention resides in a method of producing a polyrotaxane having cyclic molecules, a linear molecule threaded through the cyclic molecules to form a clathrate, and blocking groups at both ends of the linear molecule to prevent the separation of the cyclic molecules from the linear molecule. In detail, the invention is directed to a blocked polyrotaxane production method characterized in that blocking groups are introduced by reacting a pseudo polyrotaxane that includes cyclic molecules and a linear molecule having carboxyl groups at both ends thereof, with a blocking agent having an amino group in the absence of a solvent or in a solvent that is inert in the reaction and further in the presence of a specific amount of a triazine-based amidating agent.

The cyclic molecules in the invention are not particularly limited as long as the molecules can include a linear molecule therethrough. Further, the cyclic molecules may be molecules or substances that are substantially in the form of a ring. Examples of the substantially cyclic molecules include ring structures which are partly open such as the letter "C", and helical structures.

Examples of the cyclic molecules in the invention include various cyclodextrins (CDs) (for example, α-CD, β-CD, γ-CD, dimethylcyclodextrin, glucosylcyclodextrin, and derivatives or modified products thereof), crown ethers, benzocrowns, dibenzocrowns and dicyclohexanocrowns. In particular, CDs are preferable, and α-cyclodextrin is particularly preferable.

The linear molecules in the invention are not particularly limited as long as the molecules or substances can be threaded through the cyclic molecules to form clathrates in a non-covalent manner and as long as the compounds have carboxyl groups at both ends of the linear molecules.

Specific examples of the linear molecules that are terminated with carboxyl groups at both ends of the molecule include:

polyalkylene glycols (for example, polyalkylene glycols in which the alkylene moiety in the repeating unit has 2 to 14 carbon atoms) such as polyethylene glycol derivatives, polypropylene glycol derivatives, polytetramethylene glycol derivatives, polypentamethylene glycol derivatives and polyhexamethylene glycol derivatives;
aliphatic polyesters (for example, aliphatic polyesters in which the alkylene moiety in the repeating unit has 1 to 14 carbon atoms) such as polybutyrolactone derivatives and polycaprolactone derivatives;
polyolefins (for example, polyolefins in which the olefin unit has 1 to 12 carbon atoms) such as polyethylene derivatives, polypropylene derivatives and polybutene derivatives;
polydialkylsiloxanes (for example, polydialkylsiloxanes in which the alkyl moiety bonded to the silicon atom has 1 to 4 carbon atoms) such as polydimethylsiloxane derivatives;
polydienes (for example, polydienes in which the diene unit has 4 to 12 carbon atoms) such as polybutadiene derivatives and polyisoprene derivatives;
polycarbonates (for example, polycarbonates in which the hydrocarbon moiety in the repeating unit has 1 to 12 carbon atoms) such as polyethylene carbonate derivatives, polypropylene carbonate derivatives, polytetramethylene carbonate derivatives, polypentamethylene carbonate derivatives, polyhexamethylene carbonate derivatives and polyphenylene carbonate derivatives;
celluloses such as carboxymethylcellulose derivatives, hydroxyethylcellulose derivatives and hydroxypropylcellulose derivatives;
(meth)acrylic polymers such as poly(meth)acrylic acid derivatives, poly(meth)acrylate ester derivatives (for example, polymethyl methacrylate derivatives and polymethyl acrylate derivatives), poly(meth)acrylamide derivatives, poly(meth)acrylonitrile derivatives, and copolymer derivatives obtained by copolymerizing two or more kinds of monomers selected from (meth)acrylic acid, (meth)acrylate esters, (meth)acrylamides and (meth)acrylonitriles;
polyamides such as nylon 6 derivatives and nylon 66 derivatives; polyimides; polysulfonic acids; polyimines; polyureas; polysulfides; polyphosphazenes; polyketones; polyether ether ketones; and polyphenylenes such as glabrescol.

Here, the polyalkylene glycols terminated with carboxyl groups at both molecular ends refer to a type of polyalkylene glycol derivatives that are dicarboxylic acid compounds having a linear partial structure derived from a polyalkylene glycol and carboxyl groups at both ends of the partial structure. The same applies to the other derivatives such as the aliphatic polyesters terminated with carboxyl groups at both molecular ends, the polyolefins terminated with carboxyl groups at both molecular ends, the polydialkylsiloxanes terminated with carboxyl groups at both molecular ends, and the polydienes terminated with carboxyl groups at both molecular ends.

The linear molecules in the invention are preferably polyalkylene glycols, aliphatic polyesters, polyolefins, polydienes or polydialkylsiloxanes wherein both ends of the molecules are carboxyl groups; more preferably polyethylene glycol derivatives, polypropylene glycol derivatives, polytetramethylene glycol derivatives, polybutyrolactone derivatives, polycaprolactone derivatives, polyethylene derivatives, polypropylene derivatives, polybutene derivatives, polyisoprene derivatives, polybutadiene derivatives or polydimethylsiloxane derivatives wherein both ends of the molecules are carboxyl groups; and particularly preferably polyethylene glycol derivatives, polypropylene glycol derivatives, polyethylene derivatives, polypropylene derivatives or polydimethylsiloxane derivatives wherein both ends of the molecules are carboxyl groups.

The number average molecular weight of the linear molecules in the invention is not particularly limited, but is preferably 200 to 200,000, more preferably 1,000 to 100,000, still more preferably 3,000 to 50,000, and particularly preferably 5,000 to 45,000. In the present specification, the number average molecular weight may be a value measured by, for example, gel permeation chromatography (GPC, standard substance: polystyrene, pullulan or polyethylene oxide).

When the weight average molecular weight of the linear molecules is 200 or more, enhanced properties tend to be obtained when the obtainable polyrotaxane is, for example, crosslinked into a crosslinked polyrotaxane. With a weight average molecular weight of the linear molecules being 200,000 or less, the preparation of a pseudo polyrotaxane with a low water content tends to be further facilitated.

A production raw material in the invention is a dicarboxylic acid compound that is a clathrate of the linear molecule threaded through the cyclic molecules, the linear molecule having carboxyl groups at its both ends. In the specification, this compound may be referred to as a pseudo polyrotaxane.

The carboxyl groups may be introduced to both ends of the linear molecule, or the both ends of the linear molecule may be converted into carboxyl groups by any methods without limitation. For example, the hydroxyl groups at both ends of polyethylene glycol (PEG) may be carboxylated by an oxidation method such as the oxidation of PEG with potassium permanganate, with manganese oxide/hydrogen peroxide, with a chromic acid compound (the Jones oxidation) or with 2,2,6,6-tetramethyl-1-piperidinyloxy radicals (the TEMPO oxidation).

The clathration reaction of the linear molecule having carboxyl groups at both ends through the cyclic molecules may be performed by, for example, mixing the linear molecule having carboxyl groups at both molecular ends together with the cyclic molecules in a solvent. The solvent used herein is not particularly limited as long as the solvent can dissolve the linear molecule having carboxyl groups at both ends, the cyclic molecules, and the pseudo polyrotaxane that is the product, and also as long as the solvent does not hinder the clathration reaction.

The pseudo polyrotaxane that is a production raw material in the invention may be obtained by, for example, the method described in Patent Literature 1 (Example 1).

In the pseudo polyrotaxane of the invention, the number of cyclic molecules which include the linear molecule (the amount of inclusion) is not particularly limited and may be selected appropriately by such a method as controlling the amounts of the linear molecule and the cyclic molecules used, in accordance with factors such as the desired dispersibility in solvents and the kinds of modification groups. The rate of the introduction of cyclic molecules of the linear molecule (the inclusion rate) is usually 0.05 to 0.80 relative to the closest inclusion (packing rate: 100%) of the cyclic molecules of the linear molecule taken as the maximum inclusion rate of 1.0. In the case where, more specifically, the linear molecule is a polyethylene glycol derivative and the cyclic molecules are a cyclodextrin, the inclusion rate is preferably 0.05 to 0.65, more preferably 0.10 to 0.60, still more preferably 0.15 to 0.55, and particularly preferably 0.20 to 0.40. Here, the maximum amount of the inclusion of the cyclic molecules may be determined based on the length of the linear molecule and the thickness of the cyclic molecules. When, for example, the linear molecule is a polyethylene glycol derivative and the cyclic molecules are $\alpha$-cyclodextrin, the maximum amount of inclusion may be calculated by, for example, the method described in Macromolecules, 1993, Vol. 26, pp. 5698-5703. Further, the inclusion rate may be calculated by analyzing a solution of the obtained polyrotaxane in a measurement solvent (DMSO-$d_6$) on a $^1$H-NMR spectrometer (AVANCE 500 model manufactured by Bruker BioSpin) and comparing the integral value assigned to cyclodextrin-derived protons with a chemical shift of 4 to 6 ppm to the integral value assigned to PEG-derived protons with a chemical shift of 3 to 4 ppm.

In the pseudo polyrotaxane in the invention, the cyclic molecules included in a nearly maximum amount of inclusion tend to incur a limited distance over which the cyclic molecules can move on the linear molecule. With an inclusion rate of 0.65 or less, the density of the cyclic molecules on the linear molecule is appropriate and the mobility of the cyclic molecules tends to be further enhanced. On the other hand, an inclusion rate of 0.05 or more tends to ensure that the desired pulley effect (the slide-ring gel effect) is obtained sufficiently when, for example, the polyrotaxane is crosslinked into a crosslinked polyrotaxane.

From the viewpoints of the number average molecular weight of the linear molecule and the inclusion rate, the molecular weight (the number average molecular weight) of the pseudo polyrotaxane that is a production raw material is preferably 10,000 to 500,000, more preferably 30,000 to 400,000, still more preferably 50,000 to 300,000, particularly preferably 90,000 to 200,000, and further preferably 100,000 to 160,000. When the number average molecular weight of the pseudo polyrotaxane is 10,000 or more, enhanced properties tend to be obtained when the polyrotaxane is, for

example, crosslinked into a crosslinked polyrotaxane. With a number average molecular weight of the pseudo polyrotaxane being 500,000 or less, the pseudo polyrotaxane tends to be easily prepared with a low water content.

In the invention, the reaction may be adversely affected at times if the reaction mixture contains a large amount of water at the start of the reaction. Thus, the water content in the pseudo polyrotaxane that is a production raw material is preferably not more than 10 mass%, more preferably not more than 5 mass%, still more preferably not more than 3 mass%, and particularly preferably not more than 1 mass%. For example, the water content is a value measured by such a method as the Karl Fischer's method. When the pseudo polyrotaxane that is a production raw material has a water content of more than 10 mass%, the pseudo polyrotaxane is preferably used after being subjected to an appropriate treatment such as dehydration or drying.

The blocking agent having an amino group that is another production raw material used in the present invention is not particularly limited as long as it can react with the carboxyl groups at both ends of the linear molecule of the pseudo polyrotaxane and can form blocking groups that allow the linear molecule to remain threaded through the cyclic molecules after the reaction. For example, the blocking agent is preferably a compound having an amino group and a partial structure that will form the blocking group.

Examples of the partial structures for forming the blocking groups include dinitrobenzene-derived groups (for example, 2,4-dinitrophenyl group and 3,5-dinitrophenyl group), cyclodextrin-derived groups, adamantane-derived groups (for example, adamantyl group), triphenylmethane-derived groups (for example, trityl group), fluorescein-derived groups, pyrene-derived groups, substituted benzene-derived groups, optionally substituted polynuclear aromatic groups, and steroid-derived groups. The structures are preferably dinitrobenzene-derived groups, cyclodextrin-derived groups, adamantane-derived groups, triphenylmethane-derived groups, fluorescein-derived groups or pyrene-derived groups, more preferably 2,4-dinitrophenyl groups, 3,5-dinitrophenyl groups, 2,4-diphenylphenyl groups, 2,4-diisopropylphenyl groups, 2,4-di-t-butylphenyl groups, 4-diphenylaminophenyl groups, 4-diphenylphosphinylphenyl groups, adamantyl groups or trityl groups, and particularly preferably 2,4-dinitrophenyl groups, 3,5-dinitrophenyl groups, adamantyl groups or trityl groups. The blocking groups introduced at the both ends of the polyrotaxane molecule in the invention may be the same or different from each other. The blocking agents having an amino group that are used in the invention may be amines having the above partial structures for forming the blocking groups. For example, the amines having the above partial structures for forming the blocking groups may be hydrates, inorganic acid salts (such as hydrochloride salts and hydrobromide salts) or organic acid salts (such as methanesulfonate salts and toluenesulfonate salts). From the viewpoints of the reactivity with the carboxyl groups in the pseudo polyrotaxane, and/or economic efficiency, adamantylamine and hydrochloride salts thereof are preferable. Commercially available adamantylamine and hydrochloride salts thereof may be used.

In the method of the invention, the amount of the blocking agent having an amino group is not particularly limited. From the economic viewpoint, however, the amount of the blocking agent used may be 1.0 mol to 50 mol, preferably 1.4 mol to 40 mol, more preferably 2.4 mol to 30 mol, still more preferably 5.0 mol to 30 mol, and particularly preferably 7.5 mol to 20 mol with respect to 1 mol of the carboxyl groups in the linear molecule in the pseudo polyrotaxane. The use of the amidating agent in an amount of not more than 50 mol is advantageous in terms of economic efficiency.

In the method of the invention, the pseudo polyrotaxane that includes the cyclic molecules and the linear molecule, for example, a PEG derivative having carboxyl groups at both molecular ends, the blocking agent having an amino group, and optionally an organic base and/or a solvent that is inert in the reaction may be mixed together and reacted together by a method such as stirring or shaking in the presence of 2.0 mol to 100 mol of a triazine-based amidating agent per 1 mol of the carboxyl groups in the linear molecule. The triazine-based amidating agent, the pseudo polyrotaxane, the blocking agent, and the organic base and/or the inert solvent may be added in any sequence without limitation. It is, however, preferable that the reaction in the invention be performed by adding the triazine-based amidating agent to a mixture of the pseudo polyrotaxane, the blocking agent, and the organic base and/or the inert solvent.

Specific examples of the triazine-based amidating agents in the invention include compounds represented by Formula (1):

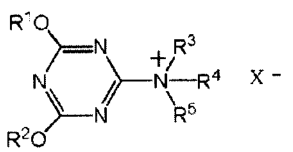 (1)

in the formula,

$R^1$ and $R^2$ are each independently an alkyl group having 1 to 4 carbon atoms or an aryl group having 6 to 8 carbon atoms,

any one of $R^3$, $R^4$ and $R^5$ is an alkyl group having 1 to 4 carbon atoms and the other two form a 5- or 6-membered

ring together with the nitrogen atom bonded therewith, and
X is a halogen atom.

Regarding $R^1$ and $R^2$, examples of the alkyl groups having 1 to 4 carbon atoms include methyl group, ethyl group, n-propyl group, isopropyl group, n-butyl group, isobutyl group, sec-butyl group and tert-butyl group, and examples of the aryl groups having 6 to 8 carbon atoms include phenyl group, toluyl group and xylyl group. Preferably, $R^1$ and $R^2$ are alkyl groups having 1 to 4 carbon atoms, and particularly preferably methyl groups.

Any one of $R^3$, $R^4$ and $R^5$ is an alkyl group having 1 to 4 carbon atoms. Examples include methyl group, ethyl group, n-propyl group, isopropyl group, n-butyl group, isobutyl group, sec-butyl group and tert-butyl group, with methyl group being particularly preferable.

The other two of $R^3$, $R^4$ and $R^5$ form a 5- or 6-membered ring group together with the nitrogen atom bonded therewith. Examples include pyrolidinyl group, piperidinyl group, morpholino group and thiomorpholino group, with morpholino group being particularly preferable. The ring may be substituted with an alkyl group having 1 to 4 carbon atoms (methyl group, ethyl group, n-propyl group, isopropyl group, n-butyl group, isobutyl group, sec-butyl group or tert-butyl group).

X is a halogen atom. Examples include fluorine atom, chlorine atom and bromine atom, with chlorine atom being particularly preferable.

From the viewpoints of the reactivity in the amidation reaction and economic efficiency (cost), the triazine-based amidating agent of Formula (1) is preferably 4-(4,6-dimethoxy-1,3,5-triazin-2-yl)-4-methyl morpholinium chloride (hereinafter, also written as DMT-MM).

In the method of the invention, the amount of the triazine-based amidating agent used is not particularly limited as long as the amount is 2.0 mol to 100 mol per 1 mol of the carboxyl groups in the linear molecule in the pseudo polyrotaxane. From the viewpoint of economic efficiency, however, the amount of the triazine-based amidating agent used is preferably 3.8 mol to 80 mol, more preferably 7.5 mol to 70 mol, and particularly preferably 15 mol to 60 mol per 1 mol of the carboxyl groups in the linear molecule in the pseudo polyrotaxane. If the amount of the amidating agent used is less than 2.0 mol, the carboxyl groups in the pseudo polyrotaxane used are not sufficiently blocked and consequently the cyclic molecules may be dissociated from the pseudo polyrotaxane. If the amount of the amidating agent used exceeds 100 mol, economic efficiency is disadvantageously deteriorated.

The reaction in the invention may be performed in the presence or absence of an organic base. When the reaction in the invention is performed in the presence of an organic base, the organic base that is used is not particularly limited as long as it does not adversely affect the amidation reaction. The amidating agent may be used as the organic base.

Examples of the organic bases include alkylamines having 3 to 24 carbon atoms such as trimethylamine, triethylamine, tri-n-propylamine, diisopropylmethylamine, and tri-n-butylamine;
optionally substituted arylamines having 8 to 24 carbon atoms such as dimethylphenylamine, ethylmethylphenylamine, diethylphenylamine, diphenylamine, diphenylmethylamine, diphenylethylamine, n-propyldiphenylamine, isopropyldiphenylamine, and triphenylamine;
optionally substituted pyridines having 5 to 24 carbon atoms such as pyridine, picoline, lutidine, collidine, dimethylaminopyridine and 4-pyrrolidinopyridine;
optionally substituted alicyclic amines having 4 to 24 carbon atoms such as diazabicycloundecene (DBU), diazabicyclononene (DBN), 1,4-diazabicyclo[2.2.2]octane (DABCO), quinuclidine, N-methylpyrrolidine, N-ethylpyrrolidine, N-methylpiperidine, N-ethylpiperidine, N-methylmorpholine, C1 to C20 alkylmorpholines, di(C1 to C10 alkyl)piperadines, and C1 to C19 alkylpiperidines;
optionally substituted imidazoles having 3 to 24 carbon atoms such as imidazole, N-(C1 to C12 alkyl)imidazoles, N-phenylimidazole, N-trimethylsilylimidazole, N-triethylsilylimidazole, and N-tert-butyldimethylsilylimidazole;
optionally substituted triazoles having 3 to 24 carbon atoms such as triazole, N-(C1 to C12 alkyl)triazoles, and N-phenyltriazole;
optionally substituted guanidines having 1 to 24 carbon atoms such as tetra(C1 to C4 alkyl)guanidines;
1,8-bis(dimethylamino)naphthalene (sometimes called proton sponge), and phosphazene.

The organic base is preferably at least one selected from the group consisting of the alkylamines having 3 to 24 carbon atoms and the alicyclic amines having 4 to 24 carbon atoms; and more preferably at least one selected from the group consisting of triethylamine, diisopropylethylamine and N-methylmorpholine.

When the reaction is performed in the presence of the organic base, the amount of the organic base used is not particularly limited as long as, for example, the reaction liquid shows alkaline properties (pH test paper). The organic base may be used also as an organic solvent.

The reaction in the invention may be performed in the absence of a solvent or in a solvent that is inert in the reaction. For example, the inert solvent may be at least one organic solvent selected from the group consisting of aprotic amide solvents such as dimethylformamide (DMF), dimethylacetamide (DMAc), N-methylpyrrolidone (NMP), β-methoxy-N,N-dimethylpropionamide and 1,3-dimethyl-2-imidazolidinone (DMI); and aromatic hydrocarbons such as benzene, toluene and xylene. In particular, at least one organic solvent selected from the group consisting of dimethylformamide, dimethylacetamide, N-methylpyrrolidone and toluene is preferable. When water is used, the amount thereof is such that the water content in the reaction mixture at the start of the reaction is not more than 5 mass%, preferably not more than 3 mass%, and more preferably not more than 1 mass%. When the water content at the start of the reaction is 5 mass% or less, the adverse effect on the amidation reaction may be suppressed more effectively. When the organic solvent is used, water is preferably absent in the solvent. When, in detail, the organic solvent that is used contains water, it is preferable that the solvent be used while making adjustments so that the water content in the reaction mixture at the start of the reaction will be not more than 5 mass%, more preferably not more than 3 mass%, and particularly preferably not more than 1 mass%. It should be noted that water produced by the amidation reaction in the invention is excluded from the calculation of the water content.

When the solvent is used, the amount of the solvent used is preferably 0.1 mL to 1000 mL, more preferably 0.5 mL to 500 mL, and particularly preferably 1 mL to 100 mL with respect to 1 g of the pseudo polyrotaxane that is a production raw material. When the amount of the solvent used is 0.1 mL or more, a decrease in the reactivity in the amidation reaction and/or a decrease in the efficiency in the stirring of the reaction mixture may be advantageously avoided. When the amount is 1000 mL or less, good economic efficiency may be advantageously obtained.

In the method of the invention, the reaction temperature is not particularly limited. However, the reaction temperature in the invention may be -20 to 150°C, preferably 0 to 100°C, more preferably 5 to 60°C, and particularly preferably 5 to 45°C. It has been shown that the pseudo polyrotaxane exhibits good reactivity at a reaction temperature in this range.

In the invention, the reaction pressure is not particularly limited. It is, however, preferable that the reaction be performed under atmospheric pressure.

Further, the reaction may be performed under a stream or in an atmosphere of an inert gas such as nitrogen or argon in the reaction vessel, or may be performed in an open system.

To perform the reaction in the invention, for example, the pseudo polyrotaxane that includes the cyclic molecules and the linear molecule, for example, a PEG having carboxyl groups at both molecular ends, the blocking agent having an amino group, and optionally the organic base and/or the solvent that is inert in the reaction are mixed together and reacted together by a method such as stirring or shaking in the presence of the triazine-based amidating agent. The reaction in the invention is characterized in that the reaction may be performed even in a solid-liquid suspension system.

After the reaction, a poor solvent for the polyrotaxane, for example, water is added to the obtained reaction mixture to precipitate a solid, and the solid that has been separated from the reaction mixture is isolated by a method such as filtration or decantation. Next, the obtained solid is optionally purified by an operation such as rinse washing or repulping washing with an agent such as a purification solvent, and the resultant solid is dried to give the target blocked polyrotaxane of the invention.

Examples of the purification solvents include water; alcohols such as methanol, ethanol, n-propanol, isopropanol and n-butanol; aliphatic hydrocarbons such as n-hexane, n-heptane and cyclohexane; ketones such as acetone, butanone and methyl isobutyl ketone; ethers such as diethyl ether, diisopropyl ether, t-butyl methyl ether, tetrahydrofuran, dioxane and 1,2-dimethoxyethane; halogenated hydrocarbons such as dichloromethane and 1,2-dichloroethane; and aromatic hydrocarbons such as benzene, toluene and xylene. These purification solvents may be used singly, or two or more kinds may be used in combination. The number of washing operations, and the amount of the purification solvents are not particularly limited.

The drying method is not particularly limited, and examples thereof include air drying, drying by the blowing of nitrogen gas, and vacuum drying. The drying temperature is not particularly limited as long as the temperature is in the range of room temperature to 100°C.

According to the methods of the invention, polyrotaxanes having the desired inclusion rate may be produced in high yield and with good purity. In the case where the cyclic molecules are a cyclodextrin, the attainment of the desired inclusion rate may be confirmed by studying the increase or decrease of the number of specific protons in the cyclodextrin in the blocked polyrotaxane by $^{1}$H-NMR spectrometry in accordance with a method such as the method described in Patent Literature 1 (Example 1). In the reaction for introducing blocking groups into a pseudo polyrotaxane with a blocking agent having an amino group, it is generally the case that the blocking agent having an amino group undergoes the amidation reaction with the carboxyl groups at the ends of the linear molecule in the pseudo polyrotaxane, and, at the same time, the second reaction, namely, the esterification reaction takes place between the hydroxyl groups of cyclodextrin in the pseudo polyrotaxane, and the carboxyl groups at the ends of the linear molecule. However, the inventive production method involving the triazine-based amidating agent allows the target blocked polyrotaxane to be obtained in high yield and with high purity by achieving very high amidation reaction selectivity.

According to the methods of the invention, the pseudo polyrotaxane that includes the cyclic molecules and the linear molecule having carboxyl groups at both ends thereof, and the blocking agent having an amino group may undergo the amidation reaction in the presence of a specific amount of the triazine-based amidating agent. With this configuration, the amidation reaction proceeds surprisingly with a good reaction yield even when performed in an inhomogeneous

reaction system such as a solid-liquid suspension system, and can afford a target polyrotaxane with high purity, the polyrotaxane having the blocking groups introduced to both ends of the linear molecule in the pseudo polyrotaxane.

Triazine-based amidating agents generally exhibit good amidation reactivity when used in combination with a water-containing solvent. According to the present invention, the triazine-based amidating agent may be used in the reaction involving the specific production raw materials to afford a blocked polyrotaxane with high purity while, surprisingly, achieving higher reaction selectivity and higher reaction yield with decreasing amount of water that is present.

## EXAMPLES

Next, the present invention will be described in detail based on Examples without limiting the scope of the invention to such Examples.

[Purity of blocked polyrotaxane]

(Apparatuses used)

Column: TSKgel SuperAWM-H, 6.0 mm diameter x 150 mm (manufactured by TOSOH CORPORATION)
Guard column: TSKguardcolumn SuperAW-H, diameter 6.0 mm x 35 mm
(manufactured by TOSOH CORPORATION)
Eluting solution: 0.01 M LiBr/DMSO (prepared from $LiBr \cdot H_2O$: 3.15 g and DMSO: 3 L)
Column temperature: 50°C
Detector: RI detector
Flow rate: 0.5 mL/min

(Preparation of samples)

The eluting solution (0.01 M LiBr/DMSO) in a volume of 4 mL was added to 10 mg to 15 mg of a blocked polyrotaxane obtained in any of Examples and Comparative Examples, and the polyrotaxane was ultrasonically dissolved. Next, the resultant solution was filtered through Chromatodisc (GL Sciences, Inc., 0.2 μm), and 30 μL of the filtrate obtained was analyzed by GPC.

(Purity measurement: GPC area percentage, GPC area %)

The sample prepared above was analyzed by GPC (standard substance: polyethylene oxide) and the GPC area % corresponding to the target blocked polyrotaxane was obtained as the purity (GPC area %) of the blocked polyrotaxane in the invention.

[Amidation selectivity]

(Apparatuses used)

The conditions were the same as the analytical conditions in the purity measurement: GPC area % described above.

(Preparation of alkali-treated samples)

To 25 mg of a blocked polyrotaxane obtained in any of Examples and Comparative Examples, 2.5 mL of water and 0.3 g of a 50 mass% aqueous sodium hydroxide solution were added. The mixture was stirred for 2 hours at room temperature. Next, 0.25 g of acetic acid and 10 mL of the eluting solution (0.01 M LiBr/DMSO) were sequentially added to the solution. The mixture was ultrasonically treated until the solid was completely dissolved. The resultant solution was filtered through a filter paper (manufactured by Advantec Toyo Kaisha, Ltd., circular quantitative filter paper, No. 5C), and 30 μL of the filtrate obtained was analyzed by GPC.

(GPC analysis: purity of polyrotaxane after alkali treatment)

The sample subjected to the above alkali treatment was analyzed by GPC (standard substance: polyethylene

oxide) and the GPC area % corresponding to the target blocked polyrotaxane was obtained as the purity (GPC area %) of the blocked polyrotaxane after the alkali treatment.

(Calculation of amidation selectivity)

The amidation selectivity in the blocked polyrotaxane of the invention was calculated based on Equation (1) below using the values of the purity of the blocked polyrotaxane obtained in any of Examples and Comparative Examples, and the purity of the blocked polyrotaxane after the alkali treatment.
[Math. 1]

Equation ⟨1⟩

$$\text{Amidation selectivity (\%)} = \frac{\text{Purity (GPC area \%) of blocked polyrotaxane after alkali treatment}}{\text{Purity (GPC area \%) of blocked polyrotaxane}} \times 100\ (\%)$$

(Reference Example: Synthesis of pseudo polyrotaxane)

(Reference Example 1: Preparation of PEG-dicarboxylic acid: TEMPO oxidation)

Polyethylene glycol (PEG) with a molecular weight of 35,000 (manufactured by Clariant) weighing 200 g was treated by the method described in Example 1 of Patent Literature 1, and thereby a polyethylene glycol derivative (PEG-dicarboxylic acid) having carboxyl groups at both molecular ends was quantitatively obtained.

(Reference Example 2: Synthesis of pseudo polyrotaxane: clathration)

An aqueous α-cyclodextrin solution (composition: α-cyclodextrin: 27.8 g, water: 40 g) that had been heated to 65 to 70°C was added to 10 g of the PEG-dicarboxylic acid prepared in Reference Example 1. At a liquid temperature of 80°C, the mixture was stirred for 1 hour, thereby performing the clathration reaction. After the completion of the reaction, the reaction liquid was distilled to remove water, and the resultant concentrate was vacuum dried to afford a pseudo polyrotaxane as a white solid (34.0 g).

(Example 1: Production of blocked polyrotaxane: adamantyl groups)

In a nitrogen atmosphere, a 100 ml volume glass flask equipped with a stirrer, a heating device and a thermometer was loaded with 15.0 g of dimethylformamide, 0.22 g (1.17 mmol) of adamantylamine hydrochloride salt and 0.63 g (6.23 mmol) of triethylamine. Stirring was performed for 30 minutes. Next, 10.00 g of a pseudo polyrotaxane obtained by the same method as in Reference Example 2 (number average molecular weight: 130,000, corresponding to 0.077 mmol), 0.32 g (1.16 mmol) of DMT-MM and 10.0 g of dimethylformamide (the (total) amount of dimethylformamide used: 25.0 g) were sequentially added in this order to the mixture liquid. The solid-liquid suspension reaction system was stirred at 25°C for 3 hours. The water content in the reaction mixture at the start of the reaction was 0.47 mass%. After the completion of the reaction, 30 g of water was admixed with the reaction mixture by stirring and the reaction was terminated. Thereafter, the reaction liquid was filtered, thereby obtaining a residue. The residue obtained was washed (rinsed) with 15.0 g of ethanol and was vacuum dried to afford 9.58 g of a target blocked polyrotaxane (hereinafter, also written as the "polyrotaxane having blocking groups") as a white solid.
The inclusion rate in the blocked polyrotaxane obtained is described in Table 1.

(Comparative Examples 1 and 2: Production of blocked polyrotaxanes: studies of amidating agents)

The reaction was performed in the same manner as in Example 1, except that the amidating agent was changed as described in Table 1. The results are described in Table 1.

(Example 2: Production of blocked polyrotaxane: studies of organic bases)

The reaction was performed in the same manner as in Example 1, except that the organic base was changed as described in Table 1. The results are described in Table 1.

(Example 3: Production of blocked polyrotaxane: studies of organic bases)

The reaction was performed in the same manner as in Example 2, except that the organic base, the reaction temperature and the reaction time were changed as described in Table 1. The results are described in Table 1.

[Table 1]

| | | Example 1 | Example 2 | Example 3 | Comparative example 1 | Comparative example 2 |
|---|---|---|---|---|---|---|
| Pseudo polyrotaxane | Ref. Ex. 2 (g) | 10 | 10 | 10 | 10 | 10 |
| Blocking agent | Adamantylamine hydrochloride salt (g) | 0.22 | 0.22 | 0.22 | 0.22 | 0.22 |
| Amidating agents | DMT-MM (g)*1 | 0.32 | 0.32 | 0.32 | - | - |
| | BOP (g) *2 | - | - | - | 0.51 | - |
| | PyBOP (g) *3 | - | - | - | - | 0.60 |
| Organic bases | TEA (g) *4 | 0.63 | - | - | - | - |
| | DIPEA (g) *5 | - | 0.81 | 0.81 | 0.81 | 0.81 |
| Number of moles of blocking agent per 1 mol of carboxyl groups in pseudo polyrotaxane (mol) | | 7.62 | 7.62 | 7.62 | 7.62 | 7.62 |
| Number of moles of amidating agent per 1 mol of carboxyl groups in pseudo polyrotaxane (mol) | | 7.52 | 7.52 | 7.52 | 7.52 | 7.52 |
| Number of moles of organic base per 1 mol of carboxyl groups in pseudo polyrotaxane (mol) | | 40.5 | 40.5 | 40.5 | 40.5 | 40.5 |
| Reaction conditions | | 25°C/3hr | 25°C/3hr | 0°C/24hr | 0°C/24hr | 0°C/24hr |
| Inclusion rate*6 | | 0.265 | - | 0.266 | 0.261 | 0.279 |
| Yield (%)*7 | | 95.2 | 94.1 | 93.7 | 94.6 | 93.1 |
| Purity (GPC area percentage; %)*8 | | 90.3 | 90.6 | 88.2 | 84.8 | 77.6 |

(continued)

| | Example 1 | Example 2 | Example 3 | Comparative example 1 | Comparative example 2 |
|---|---|---|---|---|---|
| Amidation selectivity (%)*9 | Quantitative | Quantitative | Quantitative | 99.4 | 97.8 |

*1: DMT-MM: 4-(4,6-dimethoxy-1,3,5-triazin-2-yl)-4-methyl morpholinium chloride
*2: BOP: 1H-benzotriazol-1-yloxytris(dimethylamino)phosphonium hexafluorophosphate
*3: PyBOP: 1H-benzotriazol-1-yloxytripyrrolidinophosphonium hexafluorophosphate
*4: TEA: triethylamine
*5: DIPEA: diisopropylethylamine
*6: Calculated by $^{1}$H-NMR spectrometry (DMSO-$d_6$) (maximum inclusion rate: 1.000). The hyphen (-) indicates the measurement was not performed.
*7: Yield of blocked polyrotaxane (%)
*8: Purity of blocked polyrotaxane (%)
*9: Calculated by Equation (1) (%)

(Examples 4 to 7 and Comparative Example 3: Production of blocked polyrotaxanes: studies of amounts of amidating agent used)

The reaction was performed in the same manner as in Example 1, except that the amount of the amidating agent (DMT-MM) used was changed as described in Table 2 below. The results are described in Table 2 together with the results of Example 1.

[Table 2]

| | Amidating agent*1 | | Blocked polyrotaxane | | |
|---|---|---|---|---|---|
| | Amount (g) | Number of moles per 1 mol of carboxyl groups in pseudo polyrotaxane | Yield*2 | Purity*3 (GPC area percentage) | Amidation selectivity*4 |
| Example 1 | 0.32 | 7.5 | 95.2% | 90.3% | Quantitative |
| Example 4 | 2.56 | 60.1 | 94.7% | 93.2% | 98.10% |
| Example 5 | 1.28 | 30.1 | 94.4% | 93.7% | 98.70% |
| Example 6 | 0.64 | 15.0 | 94.7% | 91.1% | Quantitative |
| Example 7 | 0.16 | 3.8 | 93.6% | 84.7% | Quantitative |
| Comparative example 3 | 0.08 | 1.9 | 93.3% | 64.1% | Quantitative |

*1: DMT-MM: 4-(4,6-dimethoxy-1,3,5-triazin-2-yl)-4-methyl morpholinium chloride
*2: Yield of blocked polyrotaxane (%)
*3: Purity of blocked polyrotaxane (%)
*4: Calculated by Equation (1) (%)

(Examples 8 to 11: Production of blocked polyrotaxanes: studies of amounts of blocking agent used)

The reaction was performed in the same manner as in Example 1, except that the amount of the blocking agent (adamantylamine hydrochloride salt) used was changed as described in Table 3 below. The results are described in Table 3 together with the results of Example 1.

[Table 3]

| | Blocking | agent*1 | Blocked polyrotaxane | | |
|---|---|---|---|---|---|
| | Amount (g) | Number of moles per 1 mol of carboxyl groups in pseudo polyrotaxane | Yield*2 | Purity*3 (GPC area percentage) | Amidation selectivity*4 |
| Example 1 | 0.22 | 7.6 | 95.2% | 90.3% | Quantitative |
| Example 8 | 0.44 | 15.2 | 94.9% | 90.7% | 99.7% |
| Example 9 | 0.11 | 3.8 | 93.3% | 90.6% | 97.8% |
| Example 10 | 0.07 | 2.4 | 91.7% | 89.2% | 97.9% |
| Example 11 | 0.04 | 1.4 | 92.0% | 85.2% | 82.3% |

*1: Adamantylamine hydrochloride salt
*2: Yield of blocked polyrotaxane (%)
*3: Purity of blocked polyrotaxane (%)
*4: Calculated by Equation ⟨1⟩ (%)

(Examples 12 and 13: Production of blocked polyrotaxanes: studies of amounts of organic base used)

The reaction was performed in the same manner as in Example 1, except that the amount of the organic base (triethylamine) used was changed as described in Table 4 below. The results are described in Table 4.

[Table 4]

| | Organic base* 1 | | Blocked polyrotaxane | | |
|---|---|---|---|---|---|
| | Amount (g) | Number of moles per 1 mol of carboxyl groups in pseudo polyrotaxane | Yield*2 | Purity*3 (GPC area percentage) | Amidation selectivity*4 |
| Example 12 | 1.26 | 80.9 | 96.2% | 90.3% | 97.30% |
| Example 13 | 0.31 | 19.9 | 94.6% | 91.3% | |

*1: TEA: triethylamine
*2: Yield of blocked polyrotaxane (%)
*3: Purity of blocked polyrotaxane (%)
*4: Calculated by Equation ⟨1⟩ (%)

(Example 14 and Comparative Examples 4 to 7: Production of blocked polyrotaxanes: studies of solvents)

The reaction was performed in the same manner as in Example 1, except that the organic solvent was changed as described in Table 5 below. The results are described in Table 5 together with the results of Example 1.

[Table 5]

| | Organic solvent*1 | Yield of blocked polyrotaxane*2 | Evaluation*3 |
|---|---|---|---|
| Example 1 | DMF | 97.0% | ○ |
| Example 14 | DMF + Toluene | 98.0% | ○ |
| Comparative example 4 | $CH_3CN$ | 23.8% | × |
| Comparative example 5 | DMSO | - | × |
| Comparative example 6 | MeOH | - | × |
| Comparative example 7 | Water | - | × |

*1: DMF: dimethylformamide, $CH_3CN$: acetonitrile, DMSO: dimethylsulfoxide, MeOH: methanol
*2: Yield of blocked polyrotaxane (%)
*3: ○: usable in the reaction, x: not usable in the reaction due to low yield or reaction failure

(Examples 15 to 18: Production of blocked polyrotaxanes: studies of water contents in organic solvent)

The reaction was performed in the same manner as in Example 1, except that the organic solvent (dimethylformamide) was allowed to contain water in an amount described in Table 6 below. The results are described in Table 6.

[Table 6]

| | Solvent used* 1 | Water used*2 | | Blocked polyrotaxane | | | Water content in reaction liquid*6 | Inclusion rate*7 |
|---|---|---|---|---|---|---|---|---|
| | Amount (g) | Amount (g) | Water content in total solvent | Yield*3 | Purity*4 (GPC area percentage) | Amidation selectivity*5 | | |
| Example 15 | 25.23 | 0 | 0.0% | 97.0% | 90.9% | Quantitative | 0.6% | 0.263 |

(continued)

| | Solvent used* 1 | Water used*2 | | Blocked polyrotaxane | | | Water content in reaction liquid*6 | Inclusion rate*7 |
|---|---|---|---|---|---|---|---|---|
| | Amount (g) | Amount (g) | Water content in total solvent | Yield*3 | Purity*4 (GPC area percentage) | Amidation selectivity*5 | | |
| Example 16 | 24.76 | 0.27 | 1.1% | 95.3% | 90.2% | Quantitative | 1.7% | 0.265 |
| Example 17 | 24.26 | 0.75 | 3.0% | 94.3% | 89.5% | Quantitative | 3.4% | 0.269 |
| Example 18 | 23.75 | 1.26 | 5.0% | 95.5% | 87.9% | Quantitative | 5.2% | 0.262 |

*1: Total amount (g) of dimethylformamide used
*2: Amount (g) of water added to reaction system, and water content (mass%) in reaction solvent (solvent + water)
*3: Yield of blocked polyrotaxane (%)
*4: Purity of blocked polyrotaxane (%)
*5: Calculated by Equation ⟨1⟩ (%)
*6: Water content (mass%) in reaction mixture after completion of reaction according to Karl Fischer's water content measurement
*7: Calculated by $^{1}$H-NMR spectrometry (DMSO-$d_6$) (maximum inclusion rate: 1.000)

(Examples 19 and 20: Production of blocked polyrotaxanes: studies of reaction temperatures)

The reaction was performed in the same manner as in Example 1, except that the reaction temperature was changed as described in Table 7 below and water was used. The results are described in Table 7.

[Table 7]

| | Reaction temperature* 1 | Blocked polyrotaxane | | |
|---|---|---|---|---|
| | | Yield*2 | Purity*3 (GPC area percentage) | Amidation selectivity*4 |
| Example 1 | 25°C | 97.0% | 90.9% | Quantitative |
| Example 19 | 50°C | 93.8% | 89.3% | 98.5% |
| Example 20 | 15°C | 96.0% | 89.3% | Quantitative |

*1: Temperature (°C) of reaction mixture during reaction
*2: Yield of blocked polyrotaxane (%)
*3: Purity of blocked polyrotaxane (%)
*4: Calculated by Equation (1) (%)

As demonstrated above, the method of the invention can produce blocked polyrotaxanes having the desired inclusion rate in a yield of not less than 90% and with a purity (GPC area percentage) of not less than 85% (in most cases, not less than 90%). Further, Table 1 shows that the inventive production method achieves enhanced amidation selectivity as compared to the methods involving conventional condensing agents, and is therefore highly advantageous in industry.

Industrial Applicability

According to the methods of the invention, polyrotaxanes having the desired inclusion rate may be produced in high yield and with good purity. The blocked polyrotaxane obtained by the inventive production method may be crosslinked by a known method after the hydroxyl groups in, for example, the cyclodextrin in the compound are substituted with, for example, hydroxyalkyl groups as required, thus forming a so-called crosslinked polyrotaxane. Such crosslinked polyrotaxanes exhibit excellent properties such as flexibility and durability that are inherent to topological gels, and are

therefore useful in applications such as, for example, packing materials, cushioning materials, buffer materials for automobiles and various apparatuses, coating materials for friction parts of apparatuses, adhesives, pressure-sensitive adhesives, sealing materials, soft contact lens materials, tire materials, electrophoresis gels, biocompatible materials, medical materials applied to the body surface such as poultice materials, coating agent materials and wound coverage materials, drug delivery systems, photographic sensitized materials, various coatings, components of coating materials including the coating materials mentioned above, separation membranes, water-swelling rubbers, water-stop tapes, hygroscopic gelling agents, fireproof covering materials for buildings, heat radiator materials, waste sludge gelling agents, chromatography carrier materials, bioreactor carrier materials, and various cell materials such as fuel cells and electrolytes.

The present invention is based on Japanese Patent Application No. 2012-082227, the entire content of which is incorporated herein by reference.

All the literatures, the patent applications and the technical standards described in the present specification are incorporated herein by reference to the same extent as when each of such literatures, patent applications and technical standards is specifically and individually described to be incorporated by reference.

## Claims

1. A method of producing a polyrotaxane having cyclic molecules, a linear molecule threaded through the cyclic molecules to form a clathrate, and blocking groups at both ends of the linear molecule to prevent the separation of the cyclic molecules from the linear molecule, the method comprising:

   forming the blocking groups by reacting the linear molecule piercing the cyclic molecules, the linear molecule having carboxyl groups at both ends thereof, with a blocking agent having an amino group in the absence of a solvent or in at least one organic solvent selected from the group consisting of aprotic amide solvents and aromatic hydrocarbons, and further in the presence of 2.0 mol to 100 mol of a triazine-based amidating agent per 1 mol of the carboxyl groups in the linear molecule.

2. The method according to claim 1, wherein the triazine-based amidating agent is a compound represented by Formula (1):

   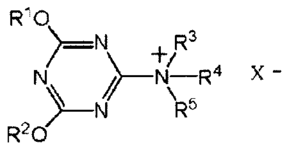 (1)

   in the formula,

   $R^1$ and $R^2$ are each independently an alkyl group having 1 to 4 carbon atoms or an aryl group having 6 to 8 carbon atoms,
   any one of $R^3$, $R^4$ and $R^5$ is an alkyl group having 1 to 4 carbon atoms and the other two form a 5- or 6-membered ring together with the nitrogen atom bonded therewith, and
   X is a halogen atom.

3. The method according to claim 2, wherein the triazine-based amidating agent is 4-(4,6-dimethoxy-1,3,5-triazin-2-yl)-4-methyl morpholinium chloride (DMT-MM).

4. The method according to any one of claims 1 to 3, wherein the linear molecule having carboxyl groups at both ends thereof is a polyalkylene glycol having carboxyl groups at both ends of the molecule.

5. The method according to any one of claims 1 to 4, wherein the cyclic molecules are a cyclodextrin.

6. The method according to any one of claims 1 to 5, wherein the blocking agent having an amino group is adamantylamine or a hydrochloride salt thereof.

7. The method according to any one of claims 1 to 6, wherein the reaction involves 3.8 mol to 80 mol of the triazine-based amidating agent per 1 mol of the carboxyl groups in the linear molecule having carboxyl groups at both ends

thereof.

**8.** The method according to any one of claims 1 to 7, wherein the reaction involves 1.4 mol to 40 mol of the blocking agent having an amino group per 1 mol of the carboxyl groups in the linear molecule having carboxyl groups at both ends thereof.

**9.** The method according to any one of claims 1 to 8, wherein the reaction is performed in at least one organic solvent selected from the group consisting of dimethylformamide, dimethylacetamide, N-methylpyrrolidone and toluene.

**10.** The method according to any one of claims 1 to 9, wherein the reaction is performed in the presence of an organic base.

**11.** The method according to any one of claims 1 to 10, wherein the reaction is performed at a reaction temperature of 5 to 60°C.

**12.** The method according to any one of claims 1 to 11, wherein the reaction is performed under conditions in which the water content in a reaction mixture at the start of the reaction is not more than 5 mass%.

**INTERNATIONAL SEARCH REPORT**

International application No. PCT/JP2013/059910

A. CLASSIFICATION OF SUBJECT MATTER
*C08G65/333*(2006.01)i, *C08B37/16*(2006.01)i

According to International Patent Classification (IPC) or to both national classification and IPC

B. FIELDS SEARCHED

Minimum documentation searched (classification system followed by classification symbols)
C08G65/00-67/04, C08B01/00-37/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | WO 2005/095493 A1 (Kozo ITO), 13 October 2005 (13.10.2005), claims; examples & US 2008/0097039 A1 & EP 1734066 A1 & CA 2562179 A & KR 10-2007-0000504 A & CN 1938367 A | 1-12 |
| A | WO 2005/080469 A1 (The University of Tokyo), 01 September 2005 (01.09.2005), claims; examples & US 2009/0312490 A1 & EP 1707587 A1 & CA 2552835 A & CN 1910218 A & KR 10-2007-0000473 A | 1-12 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 May, 2013 (07.05.13) | 21 May, 2013 (21.05.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No. PCT/JP2013/059910

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-154675 A (Kozo ITO), 16 June 2005 (16.06.2005), claims; examples & US 2009/0088546 A1 & EP 1693399 A1 & WO 2005/052026 A1 & CA 2547691 A & KR 10-2006-0107822 A & CN 1886440 A | 1-12 |
| A | WO 2009/041666 A1 (Nanodex Inc.), 02 April 2009 (02.04.2009), claims; paragraphs [0044], [0045]; examples & US 2010/0209347 A1 & EP 2194068 A1 & CN 101809039 A | 1-12 |
| A | JP 2010-174105 A (Fukuoka University), 12 August 2010 (12.08.2010), claims; examples (Family: none) | 1-12 |
| A | Dawson R.E. et. al, Synthesis of α-cyclodextrin [2]-rotaxanes using chlorotriazine capping reagents, Organic and Biomolecular Chemistry, 2008, vol.6, p.1814-1821 | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005095493 A
- JP 2012082227 A


### Non-patent literature cited in the description


- *Macromolecules,* 1993, vol. 26, 5698-5703